(19)

Europäisches
Patentamt
European
Patent Office
Office européen
des brevets

(11) **EP 1 865 646 A1**

(12) **EUROPEAN PATENT APPLICATION**
published in accordance with Art. 158(3) EPC

(43) Date of publication:
**12.12.2007 Bulletin 2007/50**

(21) Application number: **06722186.1**

(22) Date of filing: **29.03.2006**

(51) Int Cl.:
***H04L 1/24*** *(2006.01)*

(86) International application number:
**PCT/CN2006/000534**

(87) International publication number:
**WO 2006/102840 (05.10.2006 Gazette 2006/40)**

(30) Priority: **30.03.2005 CN 200510058846**

(71) Applicant: **Huawei Technologies Co., Ltd.**
**Longgang District,**
**Shenzhen**
**Guangdong 518129 (CN)**

(72) Inventor: **HE, Jianfei,**
**Huawei Administration Build.**
**Shenzhen,**
**Guangdong 518129 (CN)**

(74) Representative: **Skuhra, Udo**
**Reinhard-Skuhra-Weise & Partner GbR**
**Friedrichstrasse 31**
**80801 München (DE)**

(54) **A METHOD FOR MONITORING THE PACKET LOSS RATE**

(57)    A method of monitoring the packet loss ratio in a label switching network is disclosed, in which an OAM frame carrying packet statistical information used for monitoring the packet loss ratio is sent by the source node to the destination node of an LSP such that the current packet loss ratio could be calculated upon receiving the OAM frame by the destination node according to the packet statistical information. The present invention also discloses a method for monitoring the packet loss ratio in a multi-domain label switching network. By the method for monitoring the packet loss ratio described in the present invention, the packet loss ratio can be monitored and obtained timely and accurately. The method is simple to realize while few modifications have to be made on the existing label switching network.

the source node of the LSP sends an OAM frame used for monitoring the packet loss rate to the destination node of the LSP, carrying the number of packets ($T_t$) sent by the source node — 101

↓

the destination node obtains the number of packets ($T_t$) sent by the source node, which is carried in the OAM frame sent by the source node, and then obtains the number of packets ($R_t$) received by the destination node to obtain a data pair ($T_t, R_t$) — 102

↓

the destination node calculates the packet loss rate of the LSP according to the obtained data pair ($T_t, R_t$) and the data pair ($T_{t-1}, R_{t-1}$) obtained on receiving the last OAM frame used for monitoring the packet loss rate — 103

Fig 1

## Description

### Field of the Invention

The present invention relates to label switching technology, and more particularly, to a method for monitoring packet loss ratio in a label switching network or in a multi-domain label switching network.

### Background of the Invention

As a key technique of Next Generation Network (NGN), Multi-Protocol Label Switching (MPLS) technique has become more and more important in an Internet Protocol (IP) network. At present, the MPLS technique has evolved into General MPLS (GMPLS) through further alteration, and GMPLS can be used in a packet switching network such as Ethernet. These packet switching networks can be called label switching networks.

Since the packet loss ratio is an important index indicating the performance of a network, and it can reflect the quality of service (QoS) of the network, how to monitor the packet loss ratio in a label switching network becomes an urgent problem to be solved.

### Summary

The present invention provides a method for monitoring packet loss ratio in a label switching network, by which the accurate packet loss ratio of a label switching path (LSP) of the label switching network can be obtained in time.

The present invention also provides a method for monitoring the packet loss ratio in a multi-domain label switching network, by which the accurate packet loss ratio of each operation, administration and maintenance (OAM) domain of an LSP in the label switching network can be calculated in time.

In the first aspect, the present invention provides a method for monitoring the packet loss ratio in a label switching network, which includes:

sending an OAM frame with packet statistical information to a destination node by a source node of an LSP; and
the destination node receiving and analyzing the OAM frame to obtain the packet statistical information, and calculating the packet loss ratio of the LSP according to the packet statistical information.

The packet statistical information refers to the number of packets $(T_t)$ sent by the source node.

The step of calculating includes:

the destination node obtaining the number of packets $(T_t)$ sent by the source node from the received OAM frame, acquiring the number of packets $(R_t)$ received by the destination node, and obtaining and storing a data pair $(T_t,R_t)$;
the destination node reading a data pair $(T_{t-1},R_{t-1})$ obtained when receiving the last OAM frame used for monitoring the packet loss ratio;
calculating the absolute value of the difference between the corresponding items of the two data pairs, respectively, to obtain the total number of packets $|T_t-T_{t-1}|$ sent by the source node and the total number of packets $|R_t-R_{t-1}|$ received by the destination node in the time interval of the two consecutive receptions of the OAM frames used for monitoring the packet loss ratio;
calculating the difference between the total number of packets sent by the source node and the total number of packets received by the destination node to obtain the number of packet loss $|T_t-T_{t-1}|-|R_t-R_{t-1}|$ in the time interval of the two consecutive receptions of the OAM frames used for monitoring the packet loss ratio; and
dividing the calculated number of packet loss by the total number of packets sent by the source node to obtain the packet loss ratio of the LSP in the time interval of the two consecutive receptions of the OAM frames used for monitoring the packet loss ratio.

In another aspect, the present invention provides a method for monitoring the packet loss ratio in a multi-domain label switching network, which includes:

appointing a single or a plurality of Operation, Administration and Maintenance (OAM) domain on a label switching path, and determining an ingress node and an egress node of each OAM domain;
the ingress node of each OAM domain sending an OAM frame with the packet statistical information to the egress node of the same OAM domain; and
the egress node receiving and analyzing the in-domain OAM frame to obtain the packet statistical information, and calculating the packet loss ratio of the OAM domain according to the packet statistical information.

The packet statistical information refers to the number of packets ($T_t$) sent or received by the ingress node of the OAM domain.

The step of calculation includes:

the egress node of the OAM domain obtaining the number of packets ($T_t$) sent or received by the ingress node from the received in-domain OAM message and the number of packets ($R_t$) received or sent by the egress node itself, thus obtaining and storing a data pair ($T_t, R_t$);

the egress node of the OAM domain reading the data pair ($T_{t-1}, R_{t-1}$) obtained on receiving the last OAM frame used for monitoring the packet loss ratio;

calculating the absolute value of the difference between the corresponding items of the data pairs, respectively, to obtain the total number of packets $|T_t - T_{t-1}|$ sent or received by the ingress node and the total number of packets $|R_t - R_{t-1}|$ received or sent by the destination node in the time interval of the two consecutive receptions of the OAM frames used for monitoring the packet loss ratio;

calculating the difference between the total number of packets sent or received by the ingress node and the total number of packets received or sent by the egress node to obtain the number of packet loss $|T_t - T_{t-1}| - |R_t - R_{t-1}|$ in the time interval of the two consecutive receptions of the OAM frames used for monitoring the packet loss ratio; and dividing the number of packet loss by the total number of packets sent or received by the ingress node to obtain the packet loss ratio of this OAM domain in the time interval of two consecutive receptions of the OAM frames used for monitoring the packet loss ratio.

It can be seen from the above description that, in the method according to the present invention, the packet statistical information obtained by the source node of the LSP is sent to the destination node through the extended OAM frames, which includes: a newly defined OAM frame used for monitoring the packet loss ratio, a CV frame or an FFD frame, therefore, the destination node can obtain the packet statistical information from the upstream node and calculate the packet loss ratio in time. This method has such advantages as that the packet loss ratio can be obtained in time, the packet loss ratio calculated is accurate, and the method is simple to realize. Moreover, by the method according to the present invention, network resources, such as bandwidth, occupied by sending the packet statistical information of the label switching network are greatly reduced.

Furthermore, the present invention also provides a method for monitoring the packet loss ratio in the multi-domain label switching network, by which the packet loss ratio of an LSP segment in one OAM domain can be monitored, thus the performance and security of each part of the label switching network can be determined expediently, and the part responsible for deterioration of the performance of the network can be located.

## Brief Description of the Drawings

Figure 1 is a flow chart illustrating the method for monitoring the packet loss ratio via an extended OAM frame according to a first embodiment of the present invention;

Figure 2 is a schematic diagram illustrating an LSP in the label switching network according to the first embodiment of the present invention;

Figure 3 is a flow chart illustrating the method for monitoring the packet loss ratio via a CV frame according to a second embodiment of the present invention;

Figure 4 is a schematic diagram illustrating a multi-domain LSP in the label switching network according to a third embodiment of the present invention;

Figure 5 is a flow chart illustrating the method for monitoring the packet loss ratio of an OAM domain of an LSP via an extended in-domain OAM frame according to the third embodiment of the present invention.

## Detailed Description of the Invention

In order to monitor the packet loss ratio of an LSP in a label switching network, packet statistical information is sent by the source node of the LSP to the destination node by means of an OAM frame according to the present invention. Upon receiving the OAM frame sent by the source node of the LSP, the destination node determines the packet loss ratio according to the packet statistical information carried in the OAM frame. A detailed description will be given hereinafter with reference to preferred embodiments of the present invention.

In the method according to a first embodiment of the present embodiment, the existing OAM frame is extended to carry packet statistical information. The specific extending method includes the following steps: A new OAM type is defined to identify the OAM frame used for monitoring the packet loss ratio. The newly defined OAM frame used for monitoring the packet loss ratio is uniquely identified by the newly defined OAM type in the type field of the existing OAM frame. Another field of the OAM frame type is defined as a packet statistic field to carry the packet statistical information. According to the present embodiment, the packet statistical information refers to the number of packets sent by the source node of the LSP.

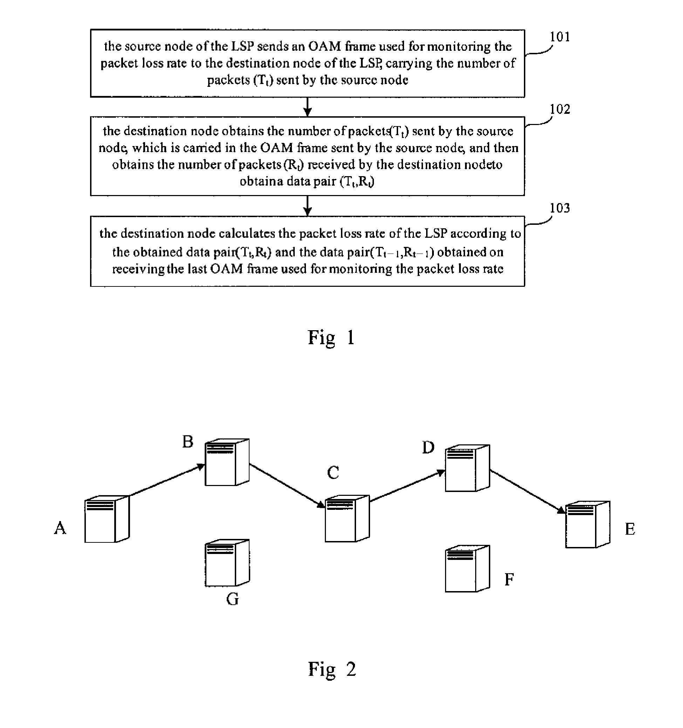

Figure 1 is the flow chart of the method for monitoring the packet loss ratio via the extended OAM frame. As shown in Figure 1, the method mainly includes the following steps.

Step 101: the source node of the LSP sends an OAM frame used for monitoring the packet loss ratio to the destination node of the LSP, wherein, the OAM frame carries the number of packets ($T_t$) sent by the source node.

As mentioned above, the source node utilizes the OAM frame type field of the newly defined OAM frame type to identify that the present OAM frame is used for monitoring the packet loss ratio, and the number of packets ($T_t$) sent by the source node is carried in the packet statistic field of the OAM frame.

Step 102: upon receiving the OAM frame used for monitoring the packet loss ratio, the destination node obtains the number of packets ($T_t$) sent by the source node, which is carried in the OAM frame sent by the source node, and then obtains the number of packets ($R_t$) received by the destination node, so that a data pair ($T_t,R_t$) is obtained.

In order to implement the above step, the destination node needs to count the number of packets ($R_t$) that have been received by itself while receiving the packets.

Step 103: the destination node calculates the packet loss ratio of the LSP according to the obtained data pair ($T_t,R_t$) and the data pair ($T_{t-1},R_{t-1}$) obtained on receiving the last OAM frame used for monitoring the packet loss ratio.

The calculation in this step is realized by adopting the following formula (1) and formula (2):

$$\text{Packet Loss} = |T_t - T_{t-1}| - |R_t - R_{t-1}| \quad (1)$$

$$\text{Packet Loss ratio} = \text{Packet Loss} / |T_t - T_{t-1}| \quad (2)$$

Furthermore, in order to avoid a calculation error caused by packets buffering at the interface of the destination node, the destination node of the LSP will catch the OAM frame used for monitoring the packet loss ratio at a location near the sending packet of a sending buffer queue.

In this embodiment, the source node of the LSP sends the packet statistical information i.e. the number of packets sent by the source node of the LSP to the destination node via the extended OAM frame. In this way, the destination node can calculate the packet loss ratio of the LSP according to the number of packets received by itself and the number of packets sent by the source node. It can be seen that the method according to the present embodiment not only can monitor the current packet loss ratio of the LSP timely and accurately, but also is simple to implement while few modifications need to be made to the existing label switching network.

An example is hereinafter given to the method in accordance with this embodiment with reference to Figure 2. As shown in Figure 2, the source node A of the LSP A→B→C→D→E sends the extended OAM frame used for monitoring the packet loss ratio to the destination node E periodically, and the extended OAM frame carries the number of packets ($T_t$) sent by the source node in its packet statistic field. The extended OAM frame reaches the destination node E through nodes B, C, and D. After detecting the extended OAM frame, the destination node E catches the frame and obtains the number of packets ($T_t$) sent by the source node A carried in the packet statistic field of the extended OAM frame, and obtains the number of packets ($R_t$) received by itself as well. In this way, a data pair ($T_t,R_t$) is obtained, and then the destination node calculates the packet loss ratio of the LSP by formula (1) and formula (2) according to the obtained data pair ($T_t,R_t$) and the data pair ($T_{t-1},R_{t-1}$) obtained on receiving the last OAM frame used for monitoring the packet loss ratio.

Besides the method of extending the existing OAM frame, other types of OAM frame can also be used for monitoring the packet loss ratio. A second embodiment of the present invention provides a method of carrying the packet statistical information by an existing Connectivity Verification (CV) frame or Fast Failure Detection (FFD) frame used as the OAM frame.

In the label switching network, in order to detect the state of a created LSP, the source node of the LSP will send a CV frame or FFD frame to the destination node periodically, and the destination node will determine if the LSP is normal or not according to whether the CV frame or FFD frame sent by the source node are received periodically.

The time interval for the source node sending the CV frames or FFD frames can be from several micro seconds (ms) to several seconds (s). For example, for FFD frames, the minimum sending time interval can be 10ms. Therefore, the source node can utilize the CV frames or FFD frames to transmit the packet statistical information to the destination node.

In the existing structure of the CV frame and FFD frame, the CV frame has a padding field with a length of 18 bytes, while the FFD frame has a padding field with a length of 17 bytes. The meaning of the padding field has not been defined yet, and the purpose of using the padding field is to make different OAM frames have the same length. Because the existing CV frame or FFD frame can not carry the packet statistical information, the present embodiment extends the existing CV frame or FFD frame by defining a part of the padding field of the CV frame or FFD frame to be a new packet statistic field to carry the packet statistical information. In this way, the destination node can calculate the packet loss ratio of the LSP according to the packet statistical information carried by the CV frame or FFD frame.

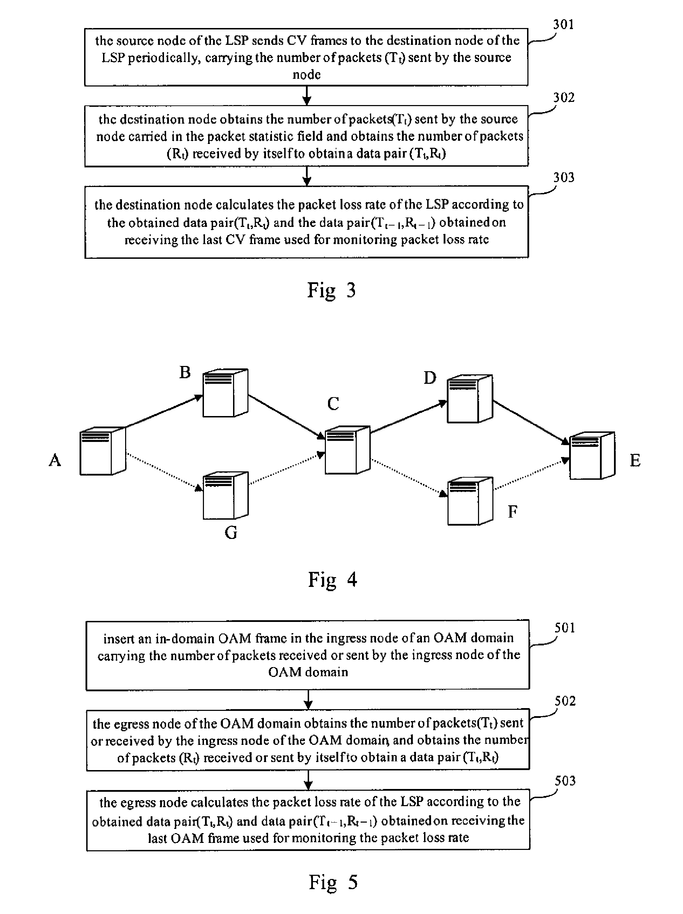

A detailed description of the present embodiment will be given hereinafter, taking a CV frame as an example. To be specific, in the present embodiment, the packet statistical information refers to the number of packets sent by the source node. The method is shown in Figure 3, which mainly includes:

Step 301: the source node of the LSP sends CV frames to the destination node of the LSP periodically, wherein the CV frames carries the number of packets ($T_t$) sent by the source node.

As mentioned above, the number of packets ($T_t$) sent by the source node is carried in the extended packet statistic field in the padding field of the CV frame.

Step 302: upon receiving a CV frame, the destination node obtains the number of packets ($T_t$) sent by the source node carried in the packet statistic field and obtains the number of packets ($R_t$) received by itself. In this way, a data pair ($T_t,R_t$) is obtained.

As mentioned in step 102, the destination node also needs to count the number of packets ($R_t$) received by itself while receiving packets.

Step 303: the destination node calculates the packet loss ratio of the LSP according to the obtained data pair ($T_t$, $R_t$) and the data pair ($T_{t-1},R_{t-1}$) obtained on receiving the last CV frame used for monitoring packet loss ratio.

The calculation mentioned in this step is the same as that in step 102, i.e. the calculation is realized by adopting the formula (1) and formula (2).

The process of monitoring the packet loss ratio using the FFD frame is similar to the process mentioned above, so no further description will be given here.

As mentioned above, in order to avoid a calculation error caused by packets buffering at the interface of the destination node, the destination node of LSP will catch the CV frame or FFD frame at a location near the sending packet of a sending buffer queue.

In the present embodiment, the source node of the LSP sends the packet statistical information i.e. the number of packets sent by the source node of the LSP to the destination node via the extended CV frame or FFD frame. In this way, the destination node can calculate the packet loss ratio of the LSP according to the number of packets received by itself and the number of packets sent by source node. It can be seen that the method mentioned in the present embodiment not only can monitor the current packet loss ratio of the LSP timely and accurately, but also is simple to implement while few modifications are made to the existing label switching network.

A third embodiment of the present invention provides a method for monitoring the packet loss ratio of each OAM domain of an LSP in the case that the LSP is a multi-domain LSP.

While performing distributed domain management to an LSP, one or a plurality of OAM domain(s) will be preappointed in the LSP, at the same time an ingress node and an egress node of each OAM domain are determined. The OAM domains can be consistent with the routing domains of the LSP. In this case, the OAM domains are automatically created when the routing domains are created. Alternatively, the OAM domains can be inconsistent with the routing domains. In this case, the OAM domains and the ingress and egress nodes thereof can be appointed via configuration.

As shown in Figure 4, nodes A, B, C and G of the label switching network constitute one OAM domain, wherein node A is the ingress node and node C is the egress node of this OAM domain, LSP A->B->C is a working LSP, and LSP A->G->C is a protection LSP. Meanwhile nodes C, D, E and F constitute another OAM domain, wherein node C is the ingress node and node E is the egress node of this OAM domain, while LSP C->D->E is a working LSP, and LSP C->F->E is a protection LSP. It can be seen that node C belongs to two OAM domains simultaneously.

For a multi-domain LSP, each OAM domain in the LSP can be managed in a distributed domain via a newly defined in-domain OAM frame. To be specific, the in-domain OAM frame carrying management information is inserted to the ingress node of each OAM domain, and the egress node of the OAM domain receives and analyzes the in-domain OAM frame, and then manages the OAM domain according to the management information carried by the in-domain OAM frame.

Be consistent with an end-to-end OAM frame, the in-domain OAM frame includes an OAM label and an OAM payload. And the encapsulation format of the in-domain OAM frame is realized by adding another layer of in-domain OAM label in the LSP label while carrying an OAM payload. The format of an OAM label is the same as that of the MPLS, which includes four fields: label, exp, s and ttl, wherein the label field carries a special number used for identifying the data frame as an in-domain OAM frame, for example, adopting 13, which is a reserved label number of the MPLS, to distinguish the data frame from an end-to-end OAM frame of which the label number is 14 according to the MPLS protocol. The meanings of other fields such as exp, s and ttl are the same as those of the MPLS label, detailed description of which could be found in RFC3032. The payload part of the OAM frame can include various types of management information according to different functions implemented by the OAM frame, for example, the payload can include various end-to-end OAM types defined by each standard organization. Furthermore, the payload of the in-domain OAM frame should also include an identification of the OAM domain to distinguish different OAM domains.

In the method of the present embodiment, the packet statistical information is transmitted using the in-domain OAM frame. The in-domain OAM frame can be an in-domain CV frame or an in-domain FFD frame or an extended new-type in-domain OAM frame.

If an in-domain CV frame or in-domain FFD frame is used for transmitting the packet statistical information, a packet statistic field needs to be added to the padding field of the in-domain CV frame or the in-domain FFD frame to carry the packet statistical information.

If an extended new type of in-domain OAM frame is used, a new in-domain OAM type has to be defined first, the newly defined in-domain OAM type is used to uniquely identify the in-domain OAM frame which is used for monitoring the packet loss ratio, and at the same time, a field of the in-domain OAM frame is defined to be a packet statistic field to carry the packet statistical information.

In the present embodiment, the packet statistical information refers to the number of packets ($T_t$) received or sent by the ingress node of an OAM domain of the LSP. Because the ingress nodes of some OAM domains of the LSP only transmit packets, the packet statistical information can also be the number of packets received by the ingress node of this OAM domain.

Figure 5 is the flowchart of the method for monitoring packet loss ratio via the above extended in-domain OAM frame. As shown in Figure 5, the method mainly includes:

Step 501: insert an in-domain OAM frame in the ingress node of an OAM domain, and the in-domain OAM frame carries the number of packets received or sent by the ingress node of the OAM domain.

In this step, as mentioned above, the in-domain OAM frame can be an in-domain OAM frame with a special OAM type identification and for monitoring the packet loss ratio. In this case, the number of packets sent or received by the ingress node of the OAM domain will be carried in the packet statistic field of the in-domain OAM frame. Furthermore, the in-domain OAM frame can also be an in-domain CV frame or an in-domain FFD frame. In this case, the number of packets ($T_t$) sent or received by the ingress node of the OAM domain will be carried in a newly defined packet statistic field in the padding field of the in-domain CV frame or the in-domain FFD frame.

Step 502: upon detecting the in-domain OAM frame, the egress node of the OAM domain obtains the number of packets ($T_t$) sent or received by the ingress node of the OAM domain, and obtains the number of packets ($R_t$) received or sent by itself. In this way, a data pair ($T_t,R_t$) is obtained.

As mentioned in step 102, in order to implement the above step, the egress node needs to count the number of packets ($R_t$) sent or received by itself while receiving packets.

Step 503: the egress node calculates the packet loss ratio of the LSP according to the obtained data pair ($T_t,R_t$) and the data pair ($T_{t-1},R_{t-1}$) obtained on receiving the last OAM frame used for monitoring the packet loss ratio.

The calculation in this step is the same as that in Step 102, i.e. the calculation is realized by adopting formula (1) and formula (2).

As mentioned above, in order to avoid a calculation error caused by packet buffering at the interface of the egress node of the OAM domain, the egress node of the OAM domain will catch the in-domain OAM frame at a location near the sending packet of a sending buffer queue.

It can be seen from the method described in the present embodiment, the source node of the LSP sends the packet statistical information i.e. the number of packets sent or received by the ingress node of the OAM to the egress node via the extended in-domain OAM frame, the CV frame or the FFD frame used for monitoring the packet loss ratio.

In this way, the egress node of the OAM domain can calculate the packet loss ratio in the OAM domain according to the number of packets received or sent by itself and the number of packets sent or received by the ingress node. The method is simple to implement while few modifications are made to the existing label switching network.

It will be apparent to those skilled in the art that various modifications and variations can be made in the present invention without departing from the spirit and scope thereof. Thus, it is intended that the present invention covers the modifications and variations of this invention that come within the scope of the appended claims and their equivalents.

**Claims**

1. A method for monitoring packet loss ratio in a label switching network, comprising:

    sending from the source node of an LSP to the destination node thereof an Operation, Administration and Maintenance (OAM) frame carrying packet statistical information; and
    receiving and analyzing the OAM frame at the destination node to obtain the packet statistical information, and calculating the packet loss ratio of the LSP according to the packet statistical information.

2. The method according to Claim 1, wherein the OAM frame is an OAM frame used for monitoring packet loss ratio comprising a type field, which uniquely identifies that the OAM frame is used for monitoring packet loss ratio, and a packet statistic field, which is used for carrying the packet statistical information.

3. The method according to Claim 1, wherein the OAM frame is a Connectivity Verification (CV) frame comprising a packet statistic field obtained by extending the padding field of the CV frame.

4. The method according to Claim 1, wherein the OAM frame is a Fast Failure Detection (FFD) frame comprising a packet statistic field obtained by extending the padding field of the FFD frame.

5. The method according to Claim 1, wherein the receiving step comprises:

    the destination node catching the OAM frame at a location near the sending packet of a sending buffer queue.

6. The method according to Claim 1, wherein the packet statistical information refers to the number of packets ($T_t$) sent by the source node;
   the calculating step comprises:

    the destination node obtaining the number of packets ($T_t$) sent by the source node from the received OAM frame and the number of packets ($R_t$) received by the destination node itself, and obtaining and storing a data pair ($T_t, R_t$);
    the destination node reading a data pair ($T_{t-1}, R_{t-1}$) obtained when receiving the last OAM frame used for monitoring the packet loss ratio;
    calculating the absolute value of the difference of the corresponding items of the two data pairs, respectively, to obtain the total number of packets $|T_t-T_{t-1}|$ sent by the source node and the total number of packets $|R_t-R_{t-1}|$ received by the destination node in the time interval between receiving the two consecutive OAM frames used for monitoring the packet loss ratio;
    calculating the difference between the total number of packets sent by the source node and the total number of packets received by the destination node to obtain the number of packet loss $|T_t-T_{t-1}|-|R_t-R_{t-1}|$ in the time interval between receiving the two consecutive OAM frames used for monitoring the packet loss ratio; and
    dividing the calculated number of packet loss by the total number of packets sent by the source node to obtain the packet loss ratio of the LSP in the time interval between receiving the two consecutive OAM frames used for monitoring the packet loss ratio.

7. A method for monitoring packet loss ratio of a multi-domain label switching network, comprising:

    appointing a single or a plurality of Operation, Administration and Maintenance (OAM) domains on a label switching path, and determining an ingress node and an egress node of each OAM domain;
    the ingress node of each OAM domain sending an in-domain OAM frame with the packet statistical information to the egress node of the same OAM domain; and
    the egress node receiving and analyzing the in-domain OAM frame to obtain the packet statistical information, and calculating the packet loss ratio of the OAM domain according to the packet statistical information.

8. The method according to Claim 7, wherein the in-domain OAM frame is an in-domain OAM frame used for monitoring the packet loss ratio comprising a type field, which uniquely identifies that the in-domain OAM frame is used for monitoring packet loss ratio, and a packet statistic field, which is used for carrying the packet statistical information.

9. The method according to Claim 7, wherein the in-domain OAM frame is an in-domain Connectivity Verification (CV) frame comprising a packet statistic field obtained by extending the padding field of the in-domain CV frame.

10. The method according to Claim 7, wherein the in-domain OAM frame is an in-domain Fast Failure Detection (FFD) frame comprising a packet statistic field obtained by extending the padding field of the in-domain FFD frame.

11. The method according to Claim 7, wherein the receiving step comprises:

the egress node of the OAM domain catching the in-domain OAM frame at a location near the sending packet of a sending buffer queue.

12. The method according to Claim 7, wherein the packet statistical information refers to the number of packets ($T_t$) sent or received by the ingress node of the OAM domain;
the calculating step comprises:

the egress node of the OAM domain obtaining the number of packets ($T_t$) sent or received by the ingress node from the received OAM message and the number of packets ($R_t$) received or sent by the egress node itself, thus obtaining and storing a data pair ($T_t$,$R_t$);
the egress node of the OAM domain reading a data pair ($T_{t-1}$,$R_{t-1}$) obtained on receiving the last OAM frame used for monitoring the packet loss ratio;
calculating the absolute value of the difference of the corresponding items of the data pairs, respectively, to obtain the total number of packets $|T_t-T_{t-1}|$ sent or received by the ingress node and the total number of packets $|R_t-R_{t-1}|$ received or sent by the destination node in the time interval between receiving the two consecutive OAM frames used for monitoring the packet loss ratio;
calculating the difference between the total number of packets sent or received by the ingress node and the total number of packets received or sent by the egress node to obtain the number of packet loss $|T_t-T_{t-1}|-|R_t-R_{t-1}|$ in the time interval between receiving the two consecutive OAM frames used for monitoring the packet loss ratio; and
dividing the number of packet loss by the total number of packets sent or received by the ingress node to obtain the packet loss ratio of this OAM domain in the time interval between receiving the two consecutive OAM frames used for monitoring the packet loss ratio.

the source node of the LSP sends an OAM frame used for monitoring the packet loss rate to the destination node of the LSP, carrying the number of packets ($T_t$) sent by the source node

101

the destination node obtains the number of packets ($T_t$) sent by the source node, which is carried in the OAM frame sent by the source node, and then obtains the number of packets ($R_t$) received by the destination node to obtain a data pair ($T_t$,$R_t$)

102

the destination node calculates the packet loss rate of the LSP according to the obtained data pair($T_t$,$R_t$) and the data pair($T_{t-1}$,$R_{t-1}$) obtained on receiving the last OAM frame used for monitoring the packet loss rate

103

Fig 1

B

D

C

A

E

G

F

Fig 2

the source node of the LSP sends CV frames to the destination node of the LSP periodically, carrying the number of packets (T$_t$) sent by the source node

301

the destination node obtains the number of packets(T$_t$) sent by the source node carried in the packet statistic field and obtains the number of packets (R$_t$) received by itself to obtain a data pair (T$_t$,R$_t$)

302

the destination node calculates the packet loss rate of the LSP according to the obtained data pair(T$_t$,R$_t$) and the data pair(T$_{t-1}$,R$_{t-1}$) obtained on receiving the last CV frame used for monitoring packet loss rate

303

Fig 3

Fig 4

insert an in-domain OAM frame in the ingress node of an OAM domain carrying the number of packets received or sent by the ingress node of the OAM domain

501

the egress node of the OAM domain obtains the number of packets(T$_t$) sent or received by the ingress node of the OAM domain and obtains the number of packets (R$_t$) received or sent by itself to obtain a data pair (T$_t$,R$_t$)

502

the egress node calculates the packet loss rate of the LSP according to the obtained data pair(T$_t$,R$_t$) and data pair(T$_{t-1}$,R$_{t-1}$) obtained on receiving the last OAM frame used for monitoring the packet loss rate

503

Fig 5

| INTERNATIONAL SEARCH REPORT | International application No. |
|---|---|
| | **PCT/CN2006/000534** |

**A. CLASSIFICATION OF SUBJECT MATTER**

H04L1/24 (2006.01) i

According to International Patent Classification (IPC) or to both national classification and IPC

**B. FIELDS SEARCHED**

Minimum documentation searched (classification system followed by classification symbols)

H04L1 (2006.01)　　H04L12/56 (2006.01)　　H04L12/28 (2006.01)

Documentation searched other than minimum documentation to the extent that such documents are included in the fields searched

Electronic data base consulted during the international search (name of data base and, where practicable, search terms used)

WPI、EPODOC、PAJ、CNPAT、CNKI: (PACKET W (LOST OR LOSS)) AND (RATE OR RATIO);　(MONITOR+ OR CALCULAT+ OR DETERMIN+ OR MEASURE+) AND NUMBER.

**C. DOCUMENTS CONSIDERED TO BE RELEVANT**

| Category* | Citation of document, with indication, where appropriate, of the relevant passages | Relevant to claim No. |
|---|---|---|
| A | WO, A1, 03098884　(SONY CORP)<br>27 Nov. 2003　(27.11.2003)　See the whole document | 1-12 |
| A | KR, A, 2003023898　(LG ELECTRONICS INC)<br>26 Mar. 2003　(26.03.2003)　See the whole document | 1-12 |
| A | EP, A1, 1414179　(TEXAS INSTR INC)<br>28 Apr. 2004　(28.04.2004)　See the whole document | 1-12 |

☐ Further documents are listed in the continuation of Box C.　　☒ See patent family annex.

| | |
|---|---|
| * Special categories of cited documents:<br><br>"A" document defining the general state of the art which is not considered to be of particular relevance<br><br>"E" earlier application or patent but published on or after the international filing date<br><br>"L" document which may throw doubts on priority claim (S) or which is cited to establish the publication date of another citation or other special reason (as specified)<br><br>"O" document referring to an oral disclosure, use, exhibition or other means<br><br>"P" document published prior to the international filing date but later than the priority date claimed | "T" later document published after the international filing date or priority date and not in conflict with the application but cited to understand the principle or theory underlying the invention<br><br>"X" document of particular relevance; the claimed invention cannot be considered novel or cannot be considered to involve an inventive step when the document is taken alone<br><br>"Y" document of particular relevance; the claimed invention cannot be considered to involve an inventive step when the document is combined with one or more other such documents, such combination being obvious to a person skilled in the art<br><br>"&" document member of the same patent family |
| Date of the actual completion of the international search<br>**26 Jun. 2006 （26.06.2006）** | Date of mailing of the international search report<br>**13 · JUL 2006 (13 · 0 7 · 2 0 0 6)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br>**WANG Zhiwei**<br><br>Telephone No. 86-10-62084532 |

Form PCT/ISA /210 (second sheet) (April 2005)

## INTERNATIONAL SEARCH REPORT
Information on patent family members

| International application No. |
| --- |
| **PCT/CN2006/000534** |

| Patent Documents referred in the Report | Publication Date | Patent Family | Publication Date |
| --- | --- | --- | --- |
| WO03098884 A | 27. 11. 2003 | JP2003338841 A | 28. 11. 2003 |
| | | EP1507369 A | 16. 02. 2005 |
| | | CN1656750 A | 17. 08. 2005 |
| | | US2005182850 A | 18. 08. 2005 |
| KR2003023898 A | 26. 03. 2003 | None | |
| EP1414179 A1 | 28. 04. 2004 | US2004076138 A1 | 22. 04. 2004 |

Form PCT/ISA /210 (patent family annex) (April 2005)